# EUROPÄISCHE PATENTSCHRIFT

(11) **EP 1 972 423 B1**
(45) Veröffentlichungstag und Bekanntmachung des Hinweises auf die Patenterteilung: **03.02.2010**
(21) Anmeldenummer: 08004545.3
(22) Anmeldetag: 12.03.2008
(51) Int. Cl.: B29C 65/00, B29C 65/78, B29C 65/18, B65B 51/26, B29C 65/04

(54) **Vorrichtung zur Herstellung von Rohrkörpern**
Device for manufacturing tubular bodies
Dispositif de fabrication de corps creux

(30) Priorität: 23.03.2007 CH 4722007
(43) Veröffentlichungstag der Anmeldung: 24.09.2008
(73) Patentinhaber: PackSys Global (Switzerland) Ltd., 8630 Rüti (CH)
(72) Erfinder: Steurer, Hans J., 8872 Weesen (CH); Zinniker, Peter, 8405 Winterthur (CH)
(74) Vertreter: Wagner, Kilian

(56) Entgegenhaltungen:
- JP-A- 8 072 905
- US-A- 3 575 769

## Beschreibung

Die Erfindung betrifft eine Vorrichtung zur Herstellung von Rohrkörpern nach dem Oberbegriff des Patentanspruches 1.

Rorhrkörper für Verpackungstuben werden aus einem aus einem einen schweissbaren Kunststoff umfassenden Folienband hergestellt, dessen Längskanten überlappend thermisch miteinander verbunden werden. Die thermische Verbindung erfolgt in Vorrichtungen der im Oberbegriff des Anspruches 1 näher erläuterten Gattung, auch Längsnahtschweissmaschinen oder "side seamers" genannt.

Bekannte Längsnahtschweissmaschinen umfassen in einer Ebene übereinander angeordnete, umlaufende, metallische Bänder, zwischen denen die überlappenden Längskanten des Folienbandes aufgenommen sind. Durch Einwirkung, von Wärme und Druck auf die Bänder wird der Werkstoff der überlappten Längskanten aufgeschmolzen und vereinigt. Anschliessend wird die so gebildete Naht in der Maschine durch auf die Bänder wirkende Kühleinrichtungen zu ihrer Verfestigung gekühlt.

Die Aufschmelzung des Kunststoffes erfolgt bei reinen Kunststofffolien oder reinen Kunststofffolienlaminaten durch Aufheizung und Uebergang der Wärme von den Bändern auf den Ueberlappungsbereich, während bei Kunststoff - Metall Folienlaminaten, bei denen wirkt die mittig angeordnete Metallschicht als Sperrschicht, meist aus Aluminium - die Sperrschicht vermittels Hochfrequenz aufgeheizt wird, deren Wärme die Kunststoffschichten aufschmilzt.

Bei den bekannten Vorrichtungen läuft das obere Band um Rollensätze um, wobei zwischen einem oberen und unteren Bandlauf auf den unteren Bandlauf einwirkend die Einrichtungen zur Wärmeerzeugung, Verpressung und Kühlung angeordnet sind. Das untere Band läuft in dem Teil der bekannten Vorrichtungen, in dem die Aufschmelzung, Verpressung und Kühlung, also die eigentliche Schweissnahtbildung erfolgt, gleichgerichtet wie die obere Bandanordnung auf einem Dorn.

Eine bekannte Vorrichtung der vorstehend vereinfacht dargestellten Art ist genauer in der Schweizer Patentschrift Nr. 682 734 beschrieben.

In der eigentlichen Schweissstrecke, d.h. der Strecke, in der die Ueberlappung zwischen den beiden Bändern gehalten, aufgeheizt und gekühlt wird, sind die beiden Bänder wechselnden thermischen und mechanischen Belastungen ausgesetzt. Diese führen zu Verzerrungen der Bänder zueinander, die den Synchronlauf der Bänder stören. Dieser Synchronlauf ist für die Herstellung einwandfreier Nähte bei hoher Fertigungsgeschwindigkeiten notwendig. Ist der Synchronlauf nicht gewährleistet resultieren Nahtfehler, wie stellenweise Ueberhitzungen, fehlerhafte Verpressungen, darunter fallen auch Ausquetschungen, auch Extrusions genannt, die das Packgut kontaminieren, Risse beidseits der Schweissnaht und andere. Ueberwachung tolerabler Schweissparaxneter-Toleranzen zur Eingrenzung der thermisch und mechanischen Wechselbelastung der Bänder und Einhaltung des Synchronlaufes erfordern einen hohen Aufwand an Steuer- und Regeleinrichtungen, der der Erhöhung heute erreichter Fertigungsgeschwindigkeiten Grenzen zieht, Diese Grenzziehung der Fertigungsgeschwindigkeiten wird bei den bekannten Sideseamern als Nachteil angesehen. Als weitere Nachteile werden bei Hochfrequenzaufheizung die nicht unbedeutenden Kosten für Hochfrequenzspulen und Hochfrequenzgeneratoren, die relativ langen Reaktionszeiten der Heizungen bei Leistungsänderungen während des Aufheizens und während des Betriebes, die aus der Forderung nach hoher Leistungsdichte resultierende Baugrösse der Heizeinrichtung, die einer Verkleinerung der Dorndurchmesser für kleinere als derzeit erreichbare kleine Tuben entgegensteht, als nachteilig empfunden.

Von diesem Stand der Technik ausgehend ist es Aufgabe der Erfindung, eine Vorrichtung zur Herstellung von Rohrkörpern zu schaffen, die die vorstehend erwähnten Nachteile und Beschränkungen meidet und die Aufgabe wird erfindungsgemäss durch einen Sideseamer, der im Oberbegriff des Anspruches 1 dargestellten Gattung vermittels der im kennzeichnenden Teil des Anspruches 1 gelöst.

In der Fachwelt herrscht die gefestigte Vorstellung vor, während der Schweissnahtbildung, also dem Aufschmelzen, Verpressen und Kühlen des Kunststoffüberlappungsbereiches dürfe der Kunststoff nicht in Eingriff, d.h. in Reibeingriff mit den Vorrichtungsteilen, die der Aufheizung, des Verpressens und des Kühlens stehen. Um dieses zu gewährleisten sind die bekannten, oberen und unteren Transportbänder vorgesehen, zwischen denen die Ueberlappung aufgenommen ist. Dabei bringt das obere Band die Ueberlappung ausser Eingriff mit der Aufheiz-, Verpress- und Kühleinrichtung, während das untere Band die Ueberlappung reibungsfrei über den Dorn fördert. Hiervon, d.h. von diesem Vorurteil hat sich die Erfindung zur Erzielung des von ihr erstrebten Zweckes gelöst, indem sie den Reibeingriff, z.B. der Heinzeinrichtung und des Dornes mit der Ueberlappung, also während der Aufschmelzung des Kunststoffes zulässt. Dies wird erreicht durch Elimination der Transportbänder und der Verwendung einer Heizung hoher Leistungsdichte und für einen kontinuierlich arbeitenden Sideseamer die Gestaltung des bekannten Formbandes zu einem Form- und Transportband.

Weitere Vorteile, Merkmale und Einzelheiten der Erfindung ergeben sich aus der folgenden Beschreibung eines bevorzugten Ausführungsbeispieles und der Zeichnung.

Es zeigen:
- Fig. 1: eine Vorrichtung zur Herstellung von Verpackungstuben in einer schematischen Seitenansicht,
- Fig. 2: ein Formelement im Rohrbildungsbereich in der Vorderansicht,
- Fig. 3: eine Heizung im Schnitt entlang der Linie X - X in Fig. 1.

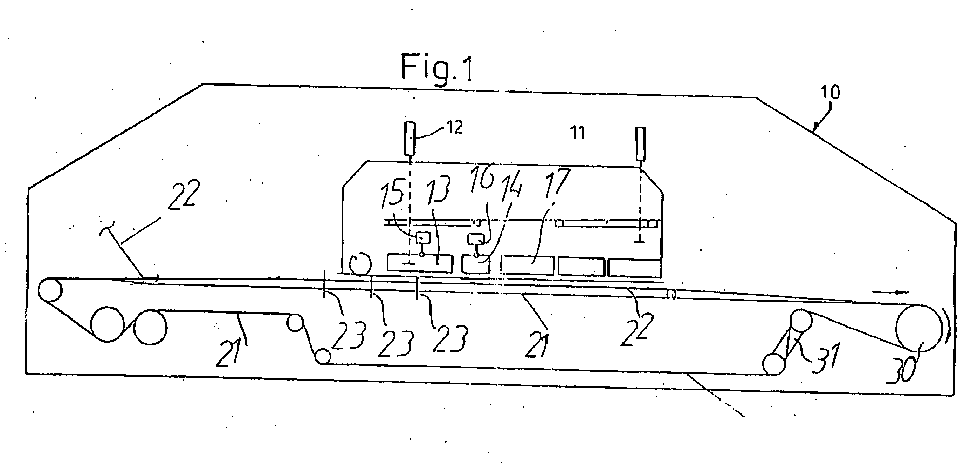

Die in Fig. 1 gezeigte erfindungsgemässe Vorrichtung zur Herstellung rohrförmiger Körper besteht aus einer Grundplatte 10, an der vorzugsweise eine Tragplatte 11 in senkrechter Richtung beweglich angelenkt ist.

Die bewegliche Anlenkung erfolgt über Stellglieder 12, die an Grundplatte 10 und Tragplatte 11 angeordnet sind, so dass die Tragplatte 11 in ihrer Stellung vertikal positionier- und festlegbar ist.

Zum Zwecke der vertikalen Verstellung sind die Aufheizeinrichtung 13 und Druckeinrichtung 14 mit jeweils einem Stellglied 15 und 16 versehen, so dass die Aufheizeinrichtung 13 und Druckeinrichtung 14 vertikal verstellbar sind.

Die der Druckeinrichtung 14 nachgeordnete Kühleinrichtung 17 entzieht der Schweissnaht die zu ihrer Verfestigung überschüssige Wärme, wobei die vorgängige Verpressung mittels der Druckeinrichtung 14, bevorzugt unter Vorerstarrung des Schweissgutes erfolgt.

Der einen rohrförmigen Körper bildende Teil der Vorrichtung umfasst einen Dorn 20, einen umlaufend angetriebenen Formriemen 21, der auf seiner dem Dorn 20 zugewandten Seite einen Kunststoff-Folienstreifen 22 trägt, und mehrere in Längsrichtung des Dornes 20 in Abstand zueinander angeordnete Formelemente 23, die den Formriemen 21 und den Folienstreifen 22 um den Umfang des Dornes 20 verformen.

Der im Querschnitt gezeigte erfindungsgemäss im wesentlichen runde Dorn 20 ist an der Grundplatte 10 angeordnet. Er erstreckt sich gleichgerichtet und in Abstand zur Aufheizeinrichtung 13, Druckeinrichtung 14 und Kühleinrichtung 17.

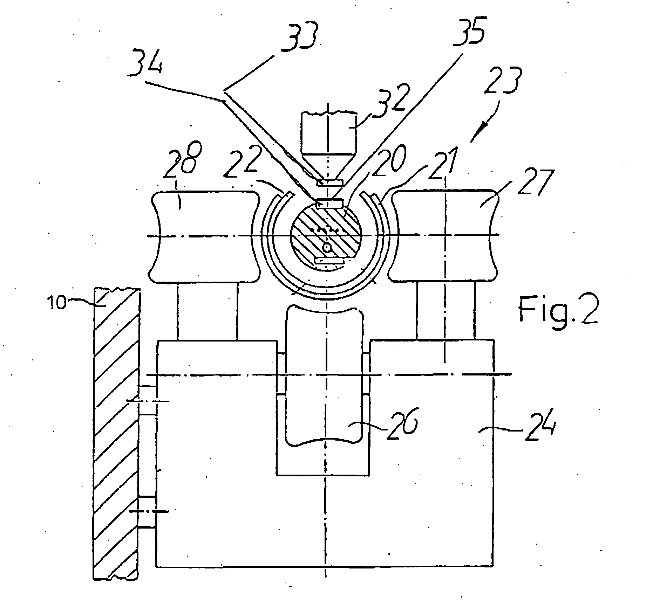

Fig. 2 zeigt ein Formelement 23 mit innerhalb des Formelementes 23 gelagertem Dorn 20 im Schnitt und der oberhalb des Dornes 20 angeordneten Aufheizeinrichtung 13. Das Formelement 23 besteht aus einem Trägerblock 24, der an seiner Seite 25 an der Grundplatte 10 befestigt ist. Das Formelement 23 trägt drei frei drehbare Formrollen 26, 27 und 28. Die unterhalb des Dornes 20 angeordnete Formrolle 26 dreht um eine waagrechte Achse, während die jeweils seitlich zum Dorn 20 angeordneten Formrollen 27 und 28 um senkrechte Achsen drehen, die exzentrisch zur Feineinstellung der Grösse des Ueberlappungsbereiches der Folienränder einstellbar sind.

Vom ersten Formelement 23 ausgehend bis zu dem Formelement 23, das Ränder einer Folie 22 in Ueberlappung auf dem Dorn 20 positioniert, nehmen die Abstände der waagrechten und senkrechten Drehachsen auf den Mittelpunkt des Dornes 20 hin ab, so dass die konvex geformten Laufflächen der Formrollen 26, 27, 28 den zwischen Laufrollen 26, 27 und 28 und Dorn 20 laufenden Formriemen 28 mit aufliegender Folie 22 in Längsrichtung um den Dorn 20 lenken. Die Breite des Formriemens 21 ist geringer als die der aufliegenden Folien 22, so dass die Längskanten des Formriemens 21 nicht in den Ueberlappungsbereich hineinragen.

Sobald die Schweissnaht durch Wärmeentzug eine vorbestimmte mechanische Festigkeit und Formbeständigkeit aufweist, nehmen die Achsabstände der Formrollen 26, 27, 28 vom Mittelpunkt des Domes 20 aus wieder zu, so dass sich der Formriemen 21 öffnet und der Formriemen 21 mit Rohr nach Freigabe des Rohres vom Dorn 20 in Längsrichtung zum Dorn 20 ablaufen kann.

Gemäss Fig. 1 wird der endlose, vorzugsweise aus leicht umformbaren, faserverstärktem Kunststoff bestehende Formriemen 21 über eine Antriebsrolle 30 angetrieben, über eine Bandspanneinrichtung 31 und um weitere Umlenkrollen geführt.

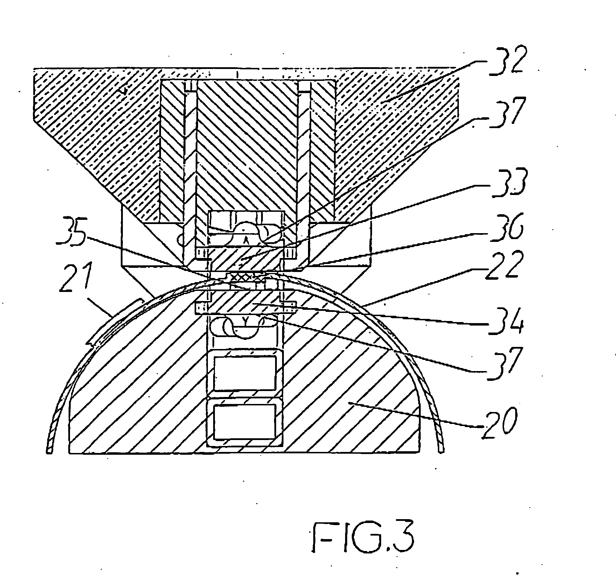

Die Antriebsrolle 30, die Bandspanneinrichtung 31 und die Umlenkrollen sind in derartig bemessenem Abstand an der Grundplatte 10 angeordnet, dass die Mittellinie des Formriemens 21 mit der senkrechten Mittellinie des Dornes 20 zusammenfällt, so dass sich die Kanten des Formriemens 21 bei Durchlauf durch die Formelemente 23, gegebenenfalls unterstützt durch eine Exzentereinstellung der Formrollen 27, 28 stets in einer wesentlichen waagerechten Ebene gegenüberliegen, wodurch ein in seiner Breite genau bemessener Ueberlappungsbereich gewährleistet ist (Fig. 3). Vorstehend wird die sprachliche Definition eines Formriemens angewendet, diese Definition schliesst die Funktion des Transportes ein, so dass Formriemen eine Kurzfassung für einen Form- und Transportriemen ist.

Gemäss Fig. 5 ist der Dorn 27 so ausgestaltet, dass er drei Hohlräume 53, 54, und 55 aufweist, wobei der Hohlraum 53 unterhalb der Aufheizeinrichtung 19, der Hohlraum 54 unterhalb der Druckeinrichtung 20 und der Hohlraum 55 unterhalb der Kühleinrichtung angeordnet ist.

Fig. 3 zeigt im Schnitt die Aufheizeinrichtung 13 und den Dorn 20 im Vertikalschnitt. Die Aufheizeinrichtung 13 umfasst einen sich in Längsrichtung zum Dorn 20 erstreckenden Heizbalken 32, der ein im Heizbalken 32 aufgenommenes erstes, dem Dorn 20 zugewandtes Heizelement 33 aufweist. Die Aufheizeinrichtung 13 umfasst weiter ein zweites Heizelement 34, das im Dorn 20 dem ersten Heizelement 33 gegenüberliegend aufgenommen ist. Die Heizelemente 33, 34 haben je eine Heizfläche 35, die sich gemäss Fig. 3. beabstandet gegenüberliegen, d.h. zwischen sich einen Spalt bilden, in dem die Ueberlappung 36 zur Aufschmelzung aufgenommen ist. Die Länge des Heizbalkens 32 richtet sich nach verschiedenen Parametern, wie z.B. Schmelztemperatur des Kunststoffes, dem zweckmässigen Wärmeeintrag pro Längeneinheit der Aufschmelzzone, der gewünschten Geschwindigkeit, der Ueberlappung durch die Aufschmelz-, Press- und Kühlstrecke. Die Erfindung sieht vor, z.B. in den äusseren Teil der Ueberlappung 36, der mit der Heizfläche 35 des ersten Heizelementes 33 in Eingriff steht, mehr Wärme einzutragen als in den inneren, mit dem zweiten Heizelement 34 in Eingriff stehenden Teil der Ueberlappung 36 oder umgekehrt einzutragen. Auch kann durch Variation der Heizflächengrösse flächenspezifisch auf die oberen oder unteren Teile der Ueberlappung mehr oder weniger Energie aufgebracht werden. Die Heizelemente 33, 34 gestatten die sich genau gegenüberliegende Positionierung im Heizbalken und Dorn 20, Diese Möglichkeit der Positionierung resultiert in kürzeren Bauformen der Dorne. Ferner erlauben die Heizelemente 33, 34 ihren Einsatz bei Dornen, deren Durchmesserkleinheit und damit Kleinheit von Tuben bisher mit Sideseamern nicht erreichbar war. Die Heizelemente 33, 34 können aus beliebigen, wärmeleitenden Werkstoffen bestehen, vorausgesetzt, sie sind über die Schmelztemperatur der Kunststoffe der Ueberlappung 36 hinaus wärme- und formbeständig, z.B. Keramik, Stahl, Aluminium, andere metallische und wärmeleitend ausgebildete Kunststoffe.

Ferner können die Heizflächen 35 zur Optimierung des Gleitverhaltens der Ueberlappung 36 über die Heizflächen 35 als Beschichtungen auf den Flächen ausgebildet sein, zwischen denen die Ueberlappung 36 aufgenommen ist. Diese Beschichtungen können bei Heizelementen 33, 34 aus den vorerwähnten Materialien, z.B. durch Hartverchromen, chemische Vernicklung etc. hergestellt sein. Aufgeheizt werden die Heizelemente 33, 34 durch eine sogenannte elektrische Dickschicht-Widerstandsheizung 37, die wie in Fig. 3 dargestellt, vorzugsweise auf einer einer Heizfläche 35 der Heizelemente 33, 34 gegenüberliegenden Fläche angeordnet ist, und von dort her die Heizelemente 33, 34 aufheizen. Eine zweckmässige Dickschicht - auch Dickfilmheizung - umfasst eine als Dielektrikum wirkende Schicht, eine heizende Dickfilmwiderstandsschicht mit elektrischen Anschlüssen und optional eine als Lasur wirkende Schicht auf der Widerstandsschicht. Die Widerstandsschicht ist zwischen dem Dielektrikum und der Lasur angeordnet, und das Dielektrikum ist auf den Flächen angeordnet, die den Heizflächen 35 der Heizelemente 33, 34 gegenüberliegen. Die Schichten (Dielektrikum, Heizschicht, Lasur) und die elektrsichen Anschlüsse werden vorzugsweise aufgedruckt. Hersteller von Schichtungswerkstoffen ist eine US Firma, die Schichtmaterialien unter den Produktebezeichnungen ESL 29115 für die Heizschicht, ESL 4914 für das Dielektrikum und ESL für aufgedruckte elektrische Anschlüsse in Schichtform vertreibt.

Die Vorrichtung nach Fig. 1 ist als eine Aufheizeinrichtung 13, Druckeinrichtung 14 und Kühleinrichtung 17 umfassend beschrieben. Darauf ist die Erfindung nicht beschränkt, z.B. können die Aufheizeinrichtung 13 und Druckeinrichtung 14 funktional in einer verpressenden Aufheizeinrichtung zusammengefasst sein. Die Kühleinrichtung wäre als solche nur notwendig, wenn der Kunststoff der Schweissnaht sich nicht bis Ablauf vom Dorn von sich aus, d.h. ohne äussere Einflussnahme verfestigt.

Der Formriemen 21 kann zur Erfüllung seiner Doppelfunktion als Form- und Förderriemen auf der Seite, auf der der Folienstreifen 22 aufliegt, mit einer reibungsverstärkenden Schichtung versehen sein, damit die Ueberlappung 36 ohne Schlupf durch den Spalt zwischen den Heizflächen 35 durch die Druckeinrichtung 14 und über die Kühleinrichtung 17 gewährleistet ist.

## Patentansprüche

1. Vorrichtung zur Herstellung von Rohrkörpern, insbesondere für Verpackungstuben aus einem einen schweissbaren Kunststoff umfassenden Folienband, dessen Längskanten thermisch durch Aufheizung, Verpressung und Kühlung miteinander verbunden sind, mit einem Formriemen, der das Folienband um einen Dorn zu einem Rohrkörper mit überlappenden Längskanten formt, die überlappenden Längskanten zur Aufschmelzung bringenden Aufheizeinrichtung, einer den aufgeschmolzenen Kunststoff verpressenden Druckeinrichtung und einer der Druckeinrichtung nachgeordneten Kühleinrichtung zur vollständigen Erstarrung des aufgeschmolzenen und verpressten Kunststoffes, **dadurch gekennzeichnet, dass** die Aufheizeinrichtung (13) einen Heizbalken (32) mit mindestens einem ersten (33) im Heizbalken (32) aufgenommenen Heizelement und mindestens ein zweites (34) in den Dorn (20) einsetzbares Heizelement umfasst, die Heizelemente (33, 34) sich gegenüberliegende, in vertikaler Richtung beabstandete, einen Spalt bildende Heizflächen (35) sind, in dem die Ueberlappung (36) ausgenommen ist, die Heizelemente (33, 34) mit einer elektrisch beaufschlagten Dickfilm-Widerstandsheizung ausgestattet und der Formriemen (21) als Form- und Transportband ausgebildet ist.

2. Vorrichtung nach Anspruch 1, **dadurch gekennzeichnet, dass** der Formriemen (21) auf seiner einen Folienstreifen (22) tragenden Fläche eine zwischen der Fläche und dem Folienstreifen reibungsverstärkende Beschichtung aufweist.

3. Vorrichtung nach Anspruch 1 oder 2, **dadurch gekennzeichnet, dass** die Dickfilmwiderstandsheizung als eine elektrisch aktivierbare Widerstandsschicht ausgebildet ist.

4. Vorrichtung nach Anspruch 3, **dadurch gekennzeichnet, dass** die Dickfilmwiderstandsheizung eine einseits zur Widerstandsschicht und mit Flächen der Heizelemente (33, 34) in Eingriff stehende, als Dielektrikum wirkende Schichtung aufweist.

5. Vorrichtung nach einem der Ansprüche 3 oder 4, **dadurch gekennzeichnet, dass** die elektrisch aktivierbare Widerstandsschicht einseits als Dielektrikum wirkenden Schicht mit einer Lasur überzogen ist.

6. Vorrichtung nach einem der Ansprüche 3 bis 5, **dadurch gekennzeichnet, dass** die elektrischen Anschlüsse als eine Schichtung ausgebildet sind.

7. Vorrichtung nach einem der Ansprüche 3 bis 6, **dadurch gekennzeichnet, dass** die Schichtungen auf die für sie vorgesehenen Flächen aufgedruckt sind.

## Claims

1. Device for producing tubular members, in particular for packaging tubes made of a film strip comprising a weldable plastics material, the longitudinal edges of which strip are thermally interconnected by heating, pressing and cooling, said device comprising a moulding belt which moulds the film strip around a mandrel to form a tubular member having overlapping longitudinal edges, a heating device for melting the overlapping longitudinal edges, a pressure device for pressing the melted plastics material and a cooling device arranged downstream from the pressure device for completely solidifying the melted and pressed plastics material, **characterised in that** the heating device (13) comprises a heating bar (32) having at least a first (33) heating element received in the heating bar (32) and at least a second (34) heating element which may be inserted into the mandrel (20), the heating elements (33, 34) are heating surfaces (35) arranged opposite and at a distance from one another in the vertical direction and form a gap in which the overlap (36) is received, the heating elements (33, 34) are equipped with an electrically charged thick-film resistance heater and the moulding belt (21) is configured as a moulding and conveying belt.

2. Device according to claim 1, **characterised in that** on its surface carrying a film strip (22), the moulding belt (21) comprises a coating which increases friction between said surface and the film strip.

3. Device according to either claim 1 or claim 2, **characterised in that** the thick-film resistance heater is configured as an electrically actuatable resistance layer.

4. Device according to claim 3, **characterised in that** on one side the thick-film resistance heater comprises a lamination acting as a dielectric which is contacted with surfaces of the heating elements (33, 34) to form the resistance layer.

5. Device according to either claim 3 or claim 4, **characterised in that** the electrically actuatable resistance layer, with a lamination acting as a dielectric on one side, is covered with a glaze.

6. Device according to any one of claims 3 to 5, **characterised in that** the electrical connection points are configured as a lamination.

7. Device according to any one of claims 3 to 6, **characterised in that** the laminations are pressed onto the surfaces provided for them.

## Revendications

1. Dispositif pour la fabrication de corps tubulaires, en particulier pour des tubes d'emballage réalisés à partir d'un ruban de film comprenant une matière synthétique soudable, dont les arêtes longitudinales sont reliées ensemble thermiquement par chauffage, pressage et refroidissement, avec une courroie de mise en forme, qui moule le ruban de film autour d'un mandrin en un corps tubulaire avec des arêtes longitudinales, un dispositif de chauffage faisant fondre les arêtes longitudinales se chevauchant, un dispositif de presse pressant la matière synthétique fondue, et un dispositif de refroidissement disposé derrière le dispositif de presse pour la solidification totale de la matière synthétique fondue et pressée, **caractérisé en ce que** le dispositif de chauffage (13) comprend une barre de chauffage (32) avec au moins un premier (13) élément de chauffage reçu dans la barre de chauffage (32) et au moins un deuxième (34) élément de chauffage insérable dans le mandrin (20), les élément de chauffage (33, 34) sont des surface de chauffage (35) se faisant face, distantes l'une de l'autre dans la direction verticale et formant une fente, dans laquelle le chevauchement (26) est reçu, les élément de chauffage (33, 34) sont équipés d'un chauffage à résistance en couches épaisses alimenté électriquement et **en ce que** la courroie de mise en forme (21) est réalisée sous la forme d'un tapis de mise en forme et de transport.

2. Dispositif selon la revendication 1, **caractérisé en ce que** la courroie de mise en forme (21) présente, sur sa surface portant une bande de film (21), un revêtement augmentant le frottement entre la surface et la bande de film.

3. Dispositif selon la revendication 1 ou 2, **caractérisé en ce que** le chauffage à résistance en couches épaisses est réalisé sous la forme d'une couche résistante activable électriquement.

4. Dispositif selon la revendication 3, **caractérisé en ce que** le chauffage à résistance en couches épaisses présente une stratification d'un côté de la couche résistante et en prise avec des surfaces des éléments de chauffage (33, 34), et agissant comme un diélectrique.

5. Dispositif selon la revendication 3 ou 4, **caractérisé en ce que** la couche résistante activable électriquement est recouverte d'un côté, en tant que couche agissant comme un diélectrique, d'un glacis.

6. Dispositif selon l'une des revendications 3 à 5, **caractérisé en ce que** les connexions électriques sont réalisées sous la forme d'une stratification.

7. Dispositif selon l'une des revendications 3 à 6, **caractérisé en ce que** les stratifications sont imprimées sur les surfaces prévues pour les recevoir.
